# EUROPÄISCHE PATENTSCHRIFT

(11) **EP 1 182 810 B1**
(45) Veröffentlichungstag und Bekanntmachung des Hinweises auf die Patenterteilung: **12.03.2008**
(21) Anmeldenummer: 01117975.1
(22) Anmeldetag: 24.07.2001
(51) Int. Cl.: H04B 10/17, H04B 10/18

(54) **Regelverfahren und optische Datenübertragungsstrecke mit einer Vorrichtung zur Kompensation von Änderungen des SRS-bedingten WDM Kanalleistungsaustausches**
Control method und optical signal transmission path comprising a device for compensating variations in the exchange of WDM channels power induced by SRS
Méthode de contrôle et liaison de transmission d'un signal optique comprenant un dispositif de compensation des variations dans l'échange de puissance entre canaux WDM induit par l'effet SRS

(30) Priorität: 21.08.2000 DE 10040790
(43) Veröffentlichungstag der Anmeldung: 27.02.2002
(73) Patentinhaber: Nokia Siemens Networks GmbH & Co. KG, 81541 München (DE)
(72) Erfinder: Gentner, Guido, 81673 München (DE); Rapp. Lutz, Dr., 82041 Deisenhofen (DE); Schex, Anton, 82110 Germering (DE)

(56) Entgegenhaltungen:
- EP-A- 1 130 822
- SRIVASTAVA ET AL: "Fast-link control protection of surviving channels in multiwavelength optical networks" IEEE PHOTONICS TECHNOLOGY LETTERS IEEE USA, Bd. 9, Nr. 12, Dezember 1997 (1997-12), Seiten 1667-1669, XP000729133 ISSN: 1041-1135
- MOTOSHIMA K ET AL: "Dynamic compensation of transient gain saturation in erbium-doped fiber amplifiers by pump feedback control" IEEE PHOTONICS TECHNOLOGY LETTERS USA, Bd. 5, Nr. 12, 1993, Seiten 1423-1426, XP002300709 ISSN: 1041-1135
- VAN DER PLAATS J C ET AL: "Dynamic pump-loss controlled gain-locking system for erbium-doped fiber amplifiers in multi-wavelength networks" 11TH INTERNATIONAL CONFERENCE ON INTEGRATED OPTICS AND OPTICAL FIBRE COMMUNICATIONS 23RD EUROPEAN CONFERENCE ON OPTICAL COMMUNICATIONS IOOC-ECOC 97 (CONF. PUBL. NO.448) IEE LONDON, UK, Bd. 3, 22. September 1997 (1997-09-22), Seiten 127-130 vol.3, XP002300710 ISBN: 0-85296-697-0

## Beschreibung

Die Erfindung betrifft ein Regelverfahren zur Kompensation von Änderungen des SRS-bedingten Leistungsaustausches beim Zu- und Abschalten von Kanälen in einer durchgehenden optischen Datenübertragungsstrecke eines WDM-Systems durch Beeinflussung der Verkippung des Spektrums. Weiterhin betrifft die Erfindung eine optische Datenübertragungsstrecke mit einem WDM-System mit einer Vielzahl von Datenübertragungskanälen unterschiedlicher Frequenz mit zumindest einem zu Beginn angeordneten Multiplexer zum Zusammenfassen der Datenübertragungskanäle, einem am Ende angeordneten Demultiplexer zum Trennen der Datenübertragungskanäle und mindestens einem dazwischen angeordneten Streckenabschnitt mit Mitteln zur Bestimmung und Kompensation der spektralen Verkippung von übertragenen Datensignalen und mit mindestens in einem Streckenabschnitt vorgesehenen Mittel zur mittelbaren oder unmittelbaren Messung der Gesamtintensität der übertragenen Lichtsignals und ein oder mehrere geregelte Füllichtquellen zur Einkopplung von Lichtleistung in zumindest einen Streckenabschnitt.

Es ist bekannt, daß es durch die stimulierte Raman-Streuung (SRS) zu einem Leistungsaustausch zwischen den einzelnen Wellenlängenkanälen eines Wellenlängenmultiplex-Systems (WDM-System) kommt. Kanäle bei größeren Wellenlängen erfahren dabei eine Zunahme ihrer mittleren Leistung, während die mittlere Leistung von Kanälen mit kleineren Wellenlängen abnimmt. Dieser Auswirkung der SRS kann im stationären Zustand einer Datenübertragungsstrecke mit WDM-System durch ein "Verkippen" des Gewinnspektrums eines Erbium-dotierten Faserverstärkers (EDFA) entgegengewirkt wird, z.B. mit Hilfe mechanisch einstellbarer Filter - wie es aus der Patentschrift US 5,847,862 und US 6,088,152 bekannt ist. Problematisch ist jedoch der Zeitpunkt des Zuschaltens oder Abschaltens von Kanälen im Betrieb oder auch der Ausfall einzelner Kanäle. Sowohl die einstellbaren Filter als auch die Erbium-dotierten Faserverstärker sind in ihrer Reaktion zu träge, um auf die schnellen Intensitätswechsel durch das Zu- und Abschalten einzelner oder mehrerer Kanäle schnell zu reagieren. So kommt es bei der Datenübertragung immer wieder zu Zeitspannen, in denen das Rausch/Signal-Verhältnis zu gering wird und die Bitfehlerrate zumindest einzelner Kanäle ansteigt. Dies führt dann zu einer reduzierten Datenrate in diesen Datenübertragungsstrecken.

Aus der Veröffentlichung von Srivastava et al. "Fast-link control protection of surviving channels in multiwavelength optical networks", IEEE Photonics Technology Letters, Vol. 9, No. 12, Dez. 1997, S. 1667-1669 ist der Einsatz von Kontroll-Kanälen (engl. "control channels") an optischen Verzweigungspunkten (engl. "optical cross connects", abgekürzt OXC) bekannt, um überlebende Kanäle in einem optischen WDM-Netzwerk mit optischen Verstärkern vor schnellen Leistungstransienten zu schützen. Der Kontroll-Kanal wird mittels eines Füllasers vor dem ersten Verstärker eines Verzweigungspunktes eingekoppelt und am nächstfolgenden Netzwerk-Element ausgekoppelt. Die Leistung des Kontroll-Kanals wird derart angepasst, dass die Gesamtleistung der in den Übertragungskanälen übertragenen Signale am Eingang des ersten Verstärkers konstant bleibt. Auf diese Weise kann schnell auf die Intensitätswechsel durch das Zu- und Abschalten einzelner oder mehrerer Kanäle reagiert werden.

Es ist daher Aufgabe der Erfindung, ein Verfahren und eine Vorrichtung zu entwickeln, welches/welche eine schnelle Kompensation der Verkippung des Spektrums beim An- und Abschalten von Kanälen oder einem Ausfall von Kanälen in einer Datenübertragungsstrecke mit WDM-System ermöglicht.

Diese Aufgabe wird durch die beiden unabhängigen Patentansprüche gelöst.

Die Erfinder haben erkannt, daß es möglich ist, die kurzfristigen und kleinen Intensitätsschwankungen in einer Datenübertragungsstrecke, die zu einer Änderung der Verkippung des übertragenen Spektrums der Datensignale in der Datenübertragungsstrecke führen, dadurch auszugleichen, daß mit Hilfe eines oder mehrerer Füllaser diese Intensitätsschwankungen sofort ausgeglichen werden und anschließend ein "Ausschleichen" dieser Änderung durch den Füllaser so langsam stattfindet, daß die vorhandene langsamen Kompensationsmechanismen der Verkippung nachregeln können. Hierbei ist es nicht notwendig, daß das ursprüngliche Spektrum der Datensignale erhalten bleibt, sondern es genügt, wenn die Gesamtintensität innerhalb einer bestimmten Bandbreite von ca. 100nm erhalten bleibt und der Füllaser in diesem Bereich, der je nach Eigenschaft der verwendeten Faser unterschiedlich liegen kann, aufrecht erhalten wird. Bezüglich dieser Wellenlängenabhängigkeit wird auf M. Zirngibl, "Analytical model of Raman gain effects in massive wavelength division multiplexed transmission systems", Electron. Lett., Vol. 34, pp. 789-790, 1998, verwiesen.

Entsprechend diesen oben geschilderten Erfindungsgedanken schlagen die Erfinder vor, das bekannte Regelverfahren zur Kompensation von Änderungen des SRS-bedingten Leistungsaustausches beim Zu- und Abschalten von Kanälen in einer durchgehenden optischen Datenübertragungsstrecke eines WDM-Systems durch Beeinflussung der Verkippung des Spektrums, dahingehend zu verbessern, daß die Verkippung durch mindestens zwei unterschiedlich schnell arbeitende Systeme bewirkt wird, wobei mindestens ein schnelleres System eine Änderung der Gesamtleistung in der optischen Datenübertragungsstrecke misst und bei dem in einem ersten Schritt abhängig von der gemessenen Änderung der Gesamtleistung die Leistung einer oder mehrerer eingekoppelter Füllichtquellen zur Kompensation der Verkippung schnell nachgeregelt wird, und
in einem zweiten Schritt langsam die nachgeregelte Leistung der einen oder der mehreren Füllichtquellen in den Ursprungszustand zurückgefahren wird, wobei das langsamer arbeitende System diese Veränderung übernimmt. Unter Füllichtquelle ist im Sinne dieser Erfindung jede energiezuführende Lichtquelle zu verstehen, die eine Verstärkung eines optischen Signals bewirkt. Insbesondere kann dies ein Füllaser sein oder eine breitbandige Lichtquelle, zum Beispiel eine Weißlichtquelle, deren Spektrum gegebenenfalls durch ein Filter verengt wird.

In einer besonders vorteilhaften Ausführung des Verfahrens wird in der optischen Strecke zwischen Messung der Gesamtleistung und Einkopplung der Füllichtquelle eine zeitliche Verzögerung des Signals erzeugt, so daß die Reaktionszeit zwischen der Messung der Gesamtintensität und dem Ansprechen des Füllichtquelle ausgeglichen wird.

Dieses Regelverfahren kann erfindungsgemäß zusammen mit einem langsamen Verfahren zur Beeinflussung der Verkippung des Spektrums über einstellbare Filter oder über leistungsgeregelte EDFA angewandt werden.

Vorteilhaft kann der Füllaser am Anfang der optischen Übertragungsstrecke eingekoppelt oder auch am Ende der optischen Übertragungsstrecke und entgegen der Übertragungsrichtung eingekoppelt werden.

Besonders vorteilhaft ist es, anstelle einer Füllichtquelle oder Füllasers mindestens zwei Füllichtquellen oder Füllaser zu verwenden. Dadurch wird es möglich, neben der Verkippung auch die Änderung des über alle Signale gemittelten Ramangewinns auszugleichen.

Übersteigt die gesamte benützte Bandbreite 100nm, muß dafür gesorgt werden, daß die Leistung in Subbändern, die jeweils eine Bandbreite kleiner als 100nm haben, konstant bleibt. Dazu müssen entsprechend mehr Füllaser eingesetzt werden und die Gesamtleistung pro Subband gemessen werden, wobei Monitordioden verwenden werden können, die die Leistung in je einem Subband messen. Die Subbänder müssen dabei insgesamt den gesamten benützten Wellenlängenbereich abdecken. Von Vorteil ist es, wenn sich die Subbänder überlappen.

Selbstverständlich kann auch, wenn zum Beispiel die Datenübertragungsstrecke aus mehreren untereinander nicht transparenten Streckenabschnitten besteht, das oben beschriebene Verfahren für jeden einzelnen Streckenabschnitt verwendet werden.

Entsprechend dem zuvor beschriebenen Verfahren schlagen die Erfinder auch vor, eine optische Datenübertragungsstrecke mit einem WDM-System mit einer Vielzahl von Datenübertragungskanälen unterschiedlicher Frequenz mit zumindest einem zu Beginn angeordneten Multiplexer zum Zusammenfassen der Datenübertragungskanäle, einem am Ende angeordneten Demultiplexer zum Trennen der Datenübertragungskanäle und mindestens einem dazwischen angeordneten Streckenabschnitt mit Mitteln zur Bestimmung und Kompensation der spektralen Verkippung von übertragenen Datensignalen, so zu ergänzen, daß mindestens einem Streckenabschnittes zugeordnete Mittel zur mittelbaren oder unmittelbaren Messung der Gesamtintensität des übertragenen Lichtsignals, eine oder mehrere geregelte Füllichtquelle(n) zur Einkopplung von Lichtleistung in zumindest einen Streckenabschnitt und ein Mittel zur schnellen Regelung der Leistung der Füllichtquelle zur Kompensation von Leistungsschwankungen der Gesamtintensität des Datensignals und ein Mittel zur langsamen Steuerung zur Kompensation der spektralen Verkippung von übertragenen Datensignalen und Änderung der Leistung der Füllichtquelle in ihren Ursprungszustand vorgesehen ist.

Hierbei liegt eine vorteilhafte Ausführung darin, daß die Mittel zur mittelbaren oder unmittelbaren Messung der Gesamtintensität des übertragenen Lichtsignals und der geregelter Füllaser zur Einkopplung von Lichtleistung zu Beginn eines Streckenabschnitts, vorzugsweise zu Beginn der gesamten Datenübertragungsstrecke, angeordnet sind.

Weiterhin kann zwischen den Mitteln zur Messung der Gesamtintensität und der Füllichtquelle(n) ein Verzögerungselement angeordnet sein, welches beispielsweise eine dispersionskompensierende Faser (DCF) sein kann, die in der Datenübertragungsstrecke sowieso im Booster verwendet wird.

Es gehört außerdem auch zur Erfindung eine optische Datenübertragungsstrecke mit einer Regelvorrichtung auszustatten, die zur Durchführung des oben beschriebenen Regelverfahrens geeignet ist. Hierzu können insbesondere auch ein Mikroprozessor mit geeigneten Daten- und Programmspeichern gehören, wobei Programmmittel zur Durchführung des erfindungsgemäßen Verfahrens vorgesehen sein können. Aufwendiger, jedoch auch im Rahmen der Erfindung liegt auch eine entsprechende analoge Regelung.

In einer weiteren vorteilhaften Ausführung der optischen Datenübertragungsstrecke kann vorgesehen werden, daß die mindestens eine Frequenz der Füllichtquelle oder des Füllasers innerhalb des übertragenen Wellenlängenbandes der übertragenen Datensignale liegt. Vorzugsweise kann ein Füllaser eine einzige Frequenz aufweisen.

Wie bereits beim Regelverfahren erwähnt, können die Mittel zur Kompensation der spektralen Verkippung von übertragenen Datensignalen in den einstellbare frequenzabhängige Filter oder leistungsgeregelte EDFA aufweisen.

Des weiteren kann eine besonders vorteilhafte Ausführung der optischen Datenübertragungsstrecke vorsehen, daß die Mittel zur Bestimmung der spektralen Verkippung von übertragenen Datensignalen in den Streckenabschnitten mindestens ein Filter oder Verstärker mit frequenzabhängiger Transmissions- oder Verstärkungscharakteristik und nachgeschaltete Gesamtintensitätsmesser einschließlich einer Auswerteeinheit zur Bestimmung der Verkippung aufweisen. Bezüglich dieser besonderen Ausführung der Meßvorrichtung und Art der Messung der Verkippung des Spektrums wird auf die gleichzeitig eingereichte Patenanmeldung der Anmelderin mit dem Titel "Verfahren und Vorrichtung zur Bestimmung und Kompensation der Verkippung des Spektrums in einer Lichtleitfaser einer Datenübertragungsstrecke" hingewiesen und deren Offenbarungsgehalt bezüglich des Meßverfahrens der Verkippung vollinhaltlich übernommen.

Weitere Merkmale der Erfindung ergeben sich aus den Unteransprüchen und der nachfolgenden Beschreibung der Ausführungsbeispiele unter Bezugnahme auf die Zeichnungen.

Im folgenden wird die Erfindung anhand von in den Zeichnungen dargestellten Ausführungsbeispielen und Anwendungsfällen näher beschrieben:
- Figur 1:: Schematische Darstellung der Erfindung anhand einer optischen Datenübertragungsstrecke;
- Figur 2:: Darstellung des Steuer und Regelkonzeptes;
- Figur 3:: Zeitlicher Verlauf der Steuer- und Regelgrößen beim Zuschalten von Kanälen;
- Figur 4:: Alternative Ausgestaltung einer erfindungsgemäßen Datenübertragungsstrecke mit einstellbarem Filter.

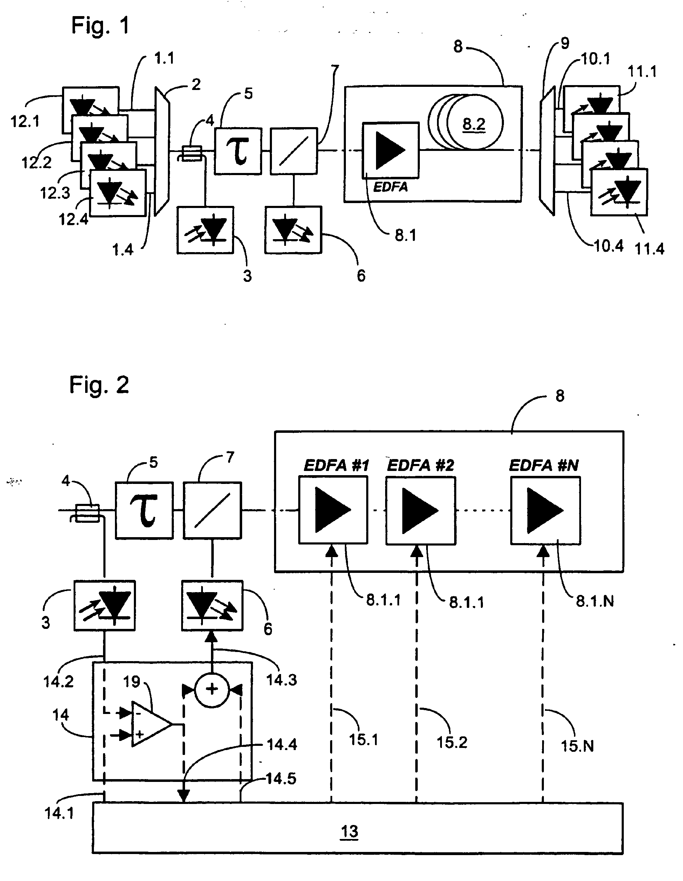

Die Figur 1 zeigt eine schematische Darstellung einer erfindungsgemäßen Ausführungsform einer optischen Datenübertragungsstrecke. Hier wird einer Vielzahl von Datenübertragungskanälen 1.1 bis 1.4 über einen Multiplexer 2 zusammengeführt. Anschließend wird über einen Koppler 4 ein konstanter ausgekoppelter Teil der Gesamtintensität der übertragenen Lichtleistung in einem Monitor 3 gemessen. Entsprechend dem Ergebnis der Intensitätsmessung wird ein Füllaser 6, der, falls keine schnellen Ausgleichsmaßnahmen notwendig sind - also im stationären Zustand -, in einem mittleren Leistungsniveau betrieben wird, aufgrund der gemessenen Leistungsschwankungen zu deren anfänglichem Ausgleich geregelt und die Leistung des Füllasers 6 über einen wellenlängenselektiven Koppler 7 hinter einem Zeitverzögerungsglied 5 in Übertragungsrichtung eingekoppelt. Anschließend folgt ein allgemein bekannter Streckenabschnitt 8 einer Datenübertragungsstrecke mit einer Verkippungsregelung über einen leistungsgesteuerten EDFA 8.1 und die anschließende eigentliche Entfernungen überwindende Übertragungsfaser 8.2. Ein Demultiplexer 9 trennt schließlich die Datenübertragungskanäle 10.1 bis 10.4 auf, die mit den Empfängern 11.1 bis 11.4 in elektrische Signale umgewandelt werden.

Das Regelverfahren zum schnellen Ausgleich der Änderungen der SRS-Verkippung verläuft wie folgt. Es wird davon ausgegangen, daß sich das System im stationären Zustand befindet und der Füllaser 6 eine mittlere Leistung P₀ abgibt. Am Ausgang des Multiplexers 2 wird die Gesamtleistung im Monitor 3 gemessen. Stellt die Meßeinrichtung eine zeitliche Änderung der Gesamtleistung fest, so wird die Leistung des Füllasers 6 entsprechend erhöht oder erniedrigt, so daß die Leistung am Eingang der Übertragungsstrecke 8 konstant bleibt. Da die Regelung des Füllasers 6 eine gewisse Zeit benötigt, werden die Signale nach der Detektion ihrer Gesamtleistung um diese Zeitdauer durch ein Verzögerungselement 5 verzögert. Für die nötige Verzögerung kann z.B. die bei der Übertragung über Standardfaser ohnehin vorhandene dispersionskompensierende Faser im Booster verwendet werden. Selbstverständlich kann die Gesamtleistung auch bestimmt werden, indem man die Ausgangsleistungen aller Sender 12.1 bis 12.4 vor dem Multiplexer 2 mißt und addiert. Ferner kann die vom Füllaser abgegebene Leistung auch am Ende eines hier nicht explizit dargestellten Boosters eingefügt werden.

Die Wellenlänge des Füllasers 6 wird dabei am besten so gewählt, daß sie innerhalb des übertragenen Wellenlängenbandes liegt. Dabei wird von der besonderen Eigenschaft der SRS Gebrauch macht, daß die Verkippung nur von der innerhalb eines Wellenlängenbereichs von ca. 100nm auftretenden Gesamtleistung abhängt, unabhängig davon, wie sich diese auf die einzelnen Kanäle verteilt. Deshalb ist für die Regelzwecke ein Füllaser bei einer einzigen Wellenlänge ausreichend.

Eine Einbettung der beschriebenen Regelung in das an sich bekannte Steuer- und Regelkonzept der Verkippungskompensation in der Übertragungsstrecke ist in der Figur 2 dargestellt.

Die langsame Steuerung gibt an die N EDFA 8.1.1 bis 8.1.N der Übertragungsstrecke 8 Steuersignale 15.1 bis 15.N ab, die deren Verkippung vorgeben. Gleichzeitig wird noch für die schnelle Regelung 14 ein Sollwert-Signal 14.1 generiert. Ändert sich nun das Signal 14.2 der über den Monitor 3 gemessenen Gesamtleistung, gleicht dies zunächst die schnelle Regelung 14 durch Änderung der Leistung des Füllasers über das Stellsignal 14.3 aus. Die Abweichung vom Sollwert wird über das Signal 14.4 aber auch an die langsame Steuerung 13 gemeldet. Diese reagiert nun darauf, indem sie in kleinen Schritten den EDFA 18.1.1 bis 18.1.N Befehle zur Anpassung der Verkippung ausgibt und gleichzeitig den Sollwert für die Regelung über die Leitung 14.5 adaptiert. Dieser Adaptionsmechanismus wird so lange fortgesetzt, bis das Ausgangssignal des Komparators 19 verschwindet. Dadurch stellt sich ein neuer stationärer Zustand ein, bei dem der Füllaser wieder die mittlere Leistung Po abgibt.

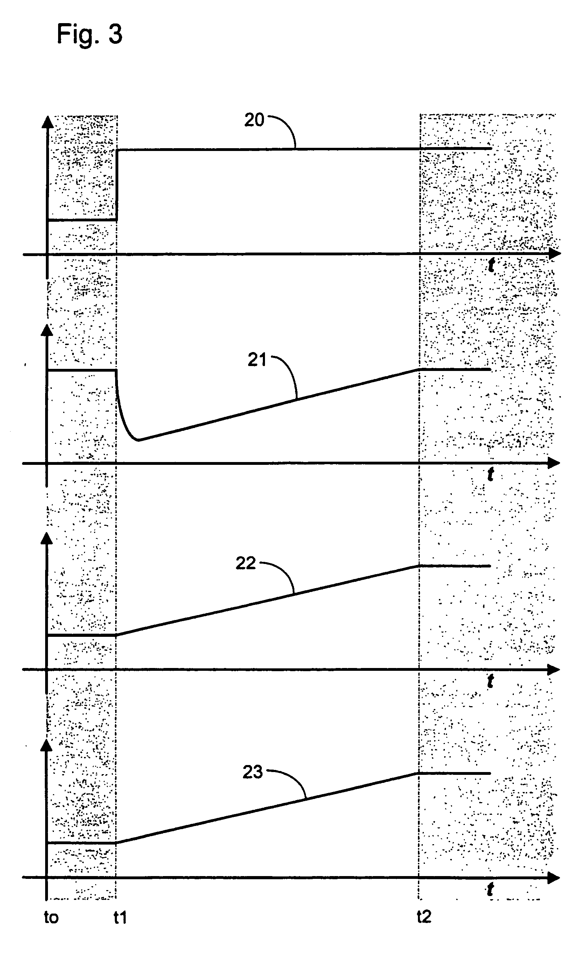

Der zeitliche Verlauf der Steuer- und Regelgrößen beim Zuschalten von Kanälen ist beispielhaft in der Figur 3 dargestellt, wobei der linke grau unterlegte Teil den anfänglichen stationären Zustand und der rechte grau unterlegte Zeitabschnitt den stationären Zustand nach Beendigung der Regelphase darstellt.

Diese Darstellung zeigt als Funktionsverlauf zeitlich koordiniert über die gleiche Zeitachse unterschiedlicher Meß- und Regelwerte der erfindungsgemäßen Regelung an. Zu Beginn - von to bis t1 - und am Ende - rechts von t2 - der Zeitachse ist der alte und neue stationäre Zustand grau unterlegt. Oben stehend ist der zeitliche Verlauf der am Monitor 3 in Figur 1 gemessenen Gesamtleistung 20 dargestellt, die am Ende der ersten grauen Fläche aufgrund des Zuschaltens von Kanälen zum Zeitpunkt t1 sprunghaft ansteigt. Darunter ist der Wert 21 des Signals 14.3 zur Ansteuerung des Füllasers 6 gezeigt, darunter der Verlauf des Wertes 22 des Sollwertes 14.1 der schnellen Regelung 14 und darunter schließlich die Größe des Wertes 23 des Steuersignals zur Verkippung der EDFA 15.1 bis 15.N aus Figur 2 aufgetragen.

Der Gewinn der EDFA 8.1.1 bis 8.1.N ist ebenfalls von Änderungen der Eingangsleistung betroffen. Im Gegensatz zur SRS reagiert der Gewinn eines EDFA aber relativ langsam auf Änderungen der Eingangsleistung, so daß eine Anpassung der in die dotierten Fasern eingekoppelten Pumpleistung ausreichend ist.

Die Einbindung der schnellen Regelung 14 in die langsame Steuerung 13 dient dazu, den Wertebereich der Ausgangsleistung des Füllasers zu begrenzen. Bei einem WDM-System mit beispielsweise 80 Kanälen in einem Wellenlängenband müßte der Füllaser in der Lage sein, eine Ausgangsleistung bis zum 80-fachen der Leistung eines Kanals abzugeben. Daraus ergeben sich dann massive Nebensprechprobleme beim Demultiplexer 9, auch wenn der Füllaser 6 einen größeren Wellenlängenabstand zu den Signallasern 12.1 bis 12.4 hat als diese untereinander. Dies ist z.B. der Fall, wenn der Füllaser 6 in einer Bandlücke untergebracht ist, in der zum Zwecke einer Subbanddispersionskompensation keine Signale liegen. Beschränkt man sich hingegen darauf, nur den gleichzeitigen Ausfall einer geringen Anzahl von Lasern, beispielsweise 16, abzufangen, so muß der Füllaser 6 nur das Sechzehnfache des Leistung eines Kanals abgeben können und die Nebensprechprobleme können vernachlässigbar gemacht werden.

Ist der stationäre Zustand nach einer ausgeführten Nachregelung wieder erreicht, so darf wieder eine kleine Anzahl von Lasern ausfallen oder Kanäle zu- oder abgeschaltet werden. Durch diese Ausführung der Regelung sind die Nebensprechprobleme relativ einfach zu beherrschen.

In der beschriebenen Form des Verfahrens wird vorausgesetzt, daß die Übertragungsstrecke bei der Wellenlänge des Füllasers transparent ist. Wenn dies nicht der Fall ist, müssen jeweils hinter den Trennstellen, die das optische Datensignal nicht passieren kann und wieder neu erzeugt wird, weitere Füllaser angebracht werden.

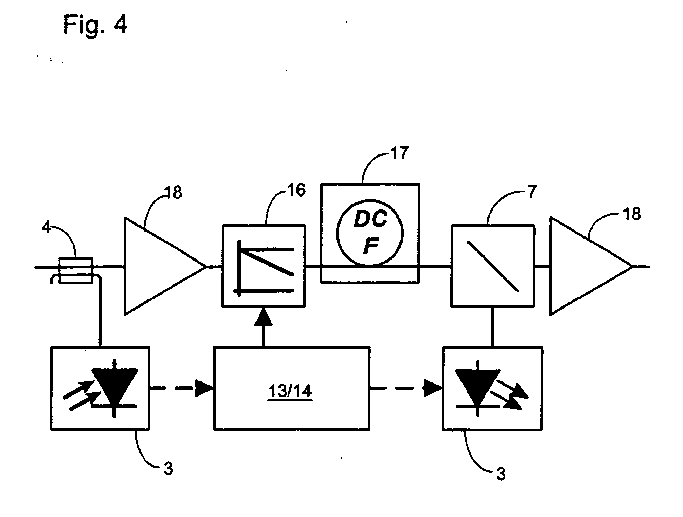

Eine alternative Ausführung einer erfindungsgemäßen Datenübertragungsstrecke ist in der Figur 4 dargestellt. Die schnelle Regelung ist in diesem Fall in jeden der Zwischenverstärker integriert, die in der Regel aus mehreren Stufen bestehen. Im vorliegenden Fall wird angenommen, daß sich zwischen den zwei dargestellten Verstärkerstufen eine dispersionskompensierende Faser (DCF) befindet. Auf eine Änderung der Gesamtleistung wird reagiert, indem die kontradirektional in die DCF eingekoppelte Leistung des Füllasers entsprechend angepaßt wird.

Die Figur 4 zeigt den prinzipellen Aufbau eines optischen Verstärkers, der typischerweise aus zwei Verstärkerstufen 18 besteht, zwischen denen sich eine Faser zur Dispersionskompensation sowie die Vorrichtung zur Kompensation der SRS befindet. Zu Beginn wird über einen Koppler 4 ein konstanter Teil der übertragenen Lichtleistung ausgekoppelt, in einem Monitor 3 gemessen und das Ergebnis an die Regelung/Steuerung 13/14 gemeldet. Von der Regelung/Steuerung 13/14 wird einerseits über ein steuerbares Filter (Gain Tilt Filter) 16 die langsam reagierende Beeinflussung der Verkippung gesteuert und andererseits der Füllaser 6 geregelt. Die Leistung des Füllasers 6 wird hinter einer dispersionskompensierenden Faser 17 über einen wellenlängenselektiven Koppler 7 entgegen Datenübertragungsrichtung eingekoppelt.

Insgesamt wird also durch das erfindungsgemäße Verfahren und die beschriebene Datenübertragungsstrecke eine im Vergleich zum Stand der Technik schnellere Kompensation der Verkippung des Spektrums beim An- und Abschalten von Kanälen oder einem Ausfall von Kanälen in einer Datenübertragungsstrecke mit WDM-System ermöglicht.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Regelverfahren zur Kompensation von Änderungen des SRS-bedingten Leistungsaustausches beim Zu- und Abschalten von Kanälen in einer durchgehenden optischen Datenübertragungsstrecke eines WDM-Systems durch Beeinflussung der Verkippung des Spektrums,
**dadurch gekennzeichnet,**
**dass** die Verkippung durch mindestens zwei unterschiedlich schnell arbeitende Systeme bewirkt wird, wobei mindestens ein schnelleres System eine Änderung der Gesamtleistung in der optischen Datenübertragungsstrecke misst,
**dass** in einem ersten Schritt abhängig von der gemessenen Änderung der Gesamtleistung die Leistung einer oder mehrerer eingekoppelter Füllichtquellen (6) zur Kompensation der Verkippung schnell nachgeregelt wird, und
in einem zweiten Schritt langsam die nachgeregelte Leistung der einen oder der mehreren Füllichtquellen (6) in den Ursprungszustand zurückgefahren wird, wobei das langsamer arbeitende System diese Veränderung übernimmt.

2. Regelverfahren gemäß dem voranstehenden Anspruch 1, **dadurch gekennzeichnet, daß** in der optischen Strecke zwischen Messung der Gesamtleistung und Einkopplung der Füllichtquelle (6) eine zeitliche Verzögerung des Signals stattfindet.

3. Regelverfahren gemäß einem der voranstehenden Ansprüche 1 bis 2, **dadurch gekennzeichnet, daß** zusätzlich die Beeinflussung der Verkippung des Spektrums über ein einstellbares Filter (16) vorgenommen wird.

4. Regelverfahren gemäß einem der voranstehenden Ansprüche 1 bis 3, **dadurch gekennzeichnet, daß** zusätzlich oder ausschließlich die Beeinflussung der Verkippung des Spektrums über leistungsgeregelte EDFA (8.1) vorgenommen wird.

5. Regelverfahren gemäß einem der voranstehenden Ansprüche 1 bis 5, **dadurch gekennzeichnet, daß** die Füllichtquelle(n) (6) am Anfang der optischen Übertragungsstrecke eingekoppelt wird bzw. werden.

6. Regelverfahren gemäß einem der voranstehenden Ansprüche 1 bis 5, **dadurch gekennzeichnet, daß** die Füllichtquelle(n) (6) am Ende der optischen Übertragungsstrecke und entgegen der Übertragungsrichtung eingekoppelt wird bzw. werden.

7. Optische Datenübertragungsstrecke mit einem WDM-System mit einer Vielzahl von Datenübertragungskanälen unterschiedlicher Frequenz mit
- zumindest einem zu Beginn angeordneten Multiplexer (2) zum Zusammenfassen der Datenübertragungskanäle (1.1-1.4),
- einem am Ende angeordneten Demultiplexer (9) zum Trennen der Datenübertragungskanäle (10.1-10.4)
- mindestens einem dazwischen angeordneten Streckenabschnitt mit Mitteln zur Bestimmung und Kompensation der spektralen Verkippung von übertragenen Datensignalen (8),
- mindestens in einem Streckenabschnitt Mittel zur mittelbaren oder unmittelbaren Messung der Gesamtintensität (3) des übertragenen Lichtsignals, und
- ein oder mehrere geregelte Füllichtquellen (6) zur Einkopplung von Lichtleistung in zumindest einen Streckenabschnitt,
**dadurch gekennzeichnet,**
**dass** ein Mittel (14) zur schnellen Regelung der Leistung der Füllichtquelle (6) zur Kompensation von Leistungsschwankungen der Gesamtintensität des Datensignals und ein Mittel (13) zur langsamen Steuerung zur Kompensation der spektralen Verkippung von übertragenen Datensignalen und Änderung der Leistung der Füllichtquelle (6) in ihren Ursprungszustand vorgesehen ist.

8. Optische Datenübertragungsstrecke gemäß dem voranstehenden Anspruch 7, **dadurch gekennzeichnet, daß** die Mittel (3) zur mittelbaren oder unmittelbaren Messung der Gesamtintensität des übertragenen Lichtsignals und mindestens eine geregelte Füllichtquelle (6) zur Einkopplung von Lichtleistung zu Beginn eines Streckenabschnitts, vorzugsweise zu Beginn der gesamten Datenübertragungsstrecke, angeordnet sind.

9. Optische Datenübertragungsstrecke gemäß einem der voranstehenden Ansprüche 7 bis 8, **dadurch gekennzeichnet, daß** zwischen den Mitteln (3) zur Messung der Gesamtintensität und einer Füllichtquelle (6) ein Verzögerungselement (5) vorgesehen ist.

10. Optische Datenübertragungsstrecke gemäß dem voranstehenden Anspruch 9, **dadurch gekennzeichnet, daß** das Verzögerungselement (5) eine dispersionskompensierende Faser (DCF), eine Faser mit geringer Dispersion oder eine mit einem Seltenerd-Element dotierte Faser ist.

11. Optische Datenübertragungsstrecke gemäß einem der voranstehenden Ansprüche 7 bis 10, **dadurch gekennzeichnet, daß** die Regelvorrichtungen (13, 14) zur Durchführung des Regelverfahrens gemäß einem der Ansprüche 1 bis 7 zur Regelung mindestens einer Füllichtquelle (6) vorgesehen sind.

12. Optische Datenübertragungsstrecke gemäß einem der voranstehenden Ansprüche 7 bis 11, **dadurch gekennzeichnet, daß** die Frequenz einer Füllichtquelle (6) innerhalb des übertragenen Wellenlängenbandes der übertragenen Datensignale liegt, vorzugsweise die Füllichtquelle (6) eine einzige Frequenz aufweist

13. Optische Datenübertragungsstrecke gemäß einem der voranstehenden Ansprüche 7 bis 12, **dadurch gekennzeichnet, daß** die Mittel zur Kompensation der spektralen Verkippung von übertragenen Datensignalen in den Streckenabschnitten einstellbare frequenzabhängige Filter aufweisen.

14. Optische Datenübertragungsstrecke gemäß einem der voranstehenden Ansprüche 7 bis 13, **dadurch gekennzeichnet, daß** die Mittel zur Kompensation der spektralen Verkippung von übertragenen Datensignalen in den Streckenabschnitten leistungsgeregelte EDFA (8.1.1-8.1.N) zur Kompensation der Verkippung aufweisen.

15. Optische Datenübertragungsstrecke gemäß einem der voranstehenden Ansprüche 7 bis 14, **dadurch gekennzeichnet, daß** die Mittel (3) zur Bestimmung der spektralen Verkippung von übertragenen Datensignalen in den Streckenabschnitten mindestens ein Filter oder Verstärker mit frequenzabhängiger Transmissions- oder Verstärkungscharakteristik und nachgeschaltete Gesamtintensitätsmesser einschließlich einer Auswerteeinheit zur Bestimmung der Verkippung aufweisen.

## Claims

1. Control method for compensating changes in the SRS-induced power exchange when connecting channels into, and disconnecting them from a continuous optical data transmission path of a WDM system by influencing the tilting of the spectrum, **characterized**
**in that** the tilting is brought about by means of at least two systems which operate at different speeds, at least one quicker system measuring a change in the overall power in the optical data transmission path, in that, in a first step, as a function of the measured change in the overall power, the power of one or more injected full light sources (6) is adjusted quickly in order to compensate the tilting, and
in a second step, the adjusted power of the one or more full light sources (6) is slowly returned to the original state, the system operating more slowly undertaking said change.

2. Control method according to the preceding claim 1, **characterized in that** a time delay takes place in the signal in the optical path between measurement of the overall power and injection of the full light source (6).

3. Control method according to one of the preceding claims 1 to 2, **characterized in that** the influencing of the tilting of the spectrum is additionally performed by means of an controllable filter (16).

4. Control method according to one of the preceding claims 1 to 3, **characterized in that** the influencing of the tilting of the spectrum is additionally or exclusively performed by means of power-controlled EDFA (8.1).

5. Control method according to one of the preceding claims 1 to 5, **characterized in that** the full light source or sources (6) is/are injected at the start of the optical transmission path.

6. Control method according to one of the preceding claims 1 to 5, **characterized in that** the full light source or sources (6) is/are injected at the end of the optical transmission path and counter to the direction of transmission.

7. Optical data transmission path having a WDM system with a multiplicity of data transmission channels with different frequencies with
- at least one multiplexer (2), arranged at the beginning, for combining the data transmission channels (1.1 - 1.4),
- one demultiplexer (9) arranged at the end, for separating the data transmission channels (10.1 - 10.4),
- at least one path section, arranged therebetween, with means for determining and compensating the spectral tilting of transmitted data signals (8),
- means for indirectly or directly measuring the overall intensity (3) of the transmitted light signal, and
- one or more controlled full light sources (6) for injecting light power into at least one path section,
**characterized in that** a means (14) for the quick control of the power of the full light source (6) in order to compensate power fluctuations of the overall intensity of the data signal and a means (13) for the slow control in order to compensate the spectral tilting of transmitted data signals and in order to change the power of the full light source (6) to its original state are provided.

8. Optical data transmission path according to the preceding claim 7, **characterized in that** the means (3) for indirectly or directly measuring the overall intensity of the transmitted light signal, and at least one controlled full light source (6) for injecting light power are arranged at the beginning of a path section, preferably at the beginning of the entire data transmission path.

9. Optical data transmission path according to one of the preceding claims 7 to 8, **characterized in that** a delay element (5) is provided between the means (3) for measuring the overall intensity and a full light source (6).

10. Optical data transmission path according to the preceding claim 9, **characterized in that** the delay element (5) is a dispersion-compensating fiber (DCF), a fiber with low dispersion or a fiber doped with a rare earth element.

11. Optical data transmission path according to one of the preceding claims 7 to 10, **characterized in that** the control devices (13, 14) are provided for carrying out the control method according to one of claims 1 to 7 in order to control at least one full light source (6).

12. Optical data transmission path according to one of the preceding claims 7 to 11, **characterized in that** the frequency of a full light source (6) lies within the transmitted wavelength band of the transmitted data signals, and the full light source (6) preferably has a single frequency.

13. Optical data transmission path according to one of the preceding claims 7 to 12, **characterized in that** the means for compensating the spectral tilting of the transmitted data signals have frequency-dependent filters which can be controlled in the path sections.

14. Optical data transmission path according to one of the preceding claims 7 to 13, **characterized in that** the means for compensating the spectral tilting of transmitted data signals in the path sections have power-controlled EDFA (8.1.1 - 8.1.N) for compensating the tilting.

15. Optical data transmission path according to one of the preceding claims 7 to 14, **characterized in that** the means (3) for determining the spectral tilting of transmitted data signals in the path sections have at least one filter or amplifier with frequency-dependent transmission characteristic or gain characteristic and downstream overall intensity meters, including an evaluation unit for determining the tilting.

## Revendications

1. Procédé de réglage pour la compensation de variations de l'échange de puissance induit par l'effet SRS lors de la connexion et de la déconnexion de canaux dans un trajet optique continu de transmission de données d'un système WDM par l'influence du basculement du spectre,
**caractérisé en ce que**
le basculement est obtenu par au moins deux systèmes travaillant avec une vitesse différente, au moins un système plus rapide mesurant une variation de la puissance globale dans le trajet optique de transmission de données,
et **en ce que**, lors d'une première étape, la puissance d'une ou de plusieurs sources de lumière de remplissage (6) injectées pour la compensation du basculement est post-réglée rapidement en fonction de la variation mesurée de la puissance globale et dans une deuxième étape, la puissance post-réglée d'une ou des plusieurs sources de lumière de remplissage (6) est ramenée lentement dans l'état initial, le système travaillant plus lentement assumant cette variation.

2. Procédé de réglage selon la revendication 1 précédente, **caractérisé en ce qu'**une temporisation du signal a lieu dans le trajet optique entre la mesure de la puissance globale et l'injection de la source de lumière de remplissage (6).

3. Procédé de réglage selon l'une quelconque des revendications précédentes 1 à 2, **caractérisé en ce qu'**on procède en supplément à l'influence du basculement du spectre par un filtre (16) réglable.

4. Procédé de réglage selon l'une quelconque des revendications précédentes 1 à 3, **caractérisé en ce que**, en supplément ou de façon exclusive, l'influence de basculement du spectre est effectuée par des EDFA (8.1) réglés au niveau de la puissance.

5. Procédé de réglage selon l'une quelconque des revendications précédentes 1 à 4, **caractérisé en ce que** la (les) source(s) de lumière de remplissage (6) est ou sont injectée(s) au début du trajet optique de transmission.

6. Procédé de réglage selon l'une quelconque des revendications précédentes 1 à 5, **caractérisé en ce que** la (les) source(s) de lumière de remplissage (6) est ou sont injectée(s) à la fin du trajet de transmission optique et dans le sens contraire au sens de transmission.

7. Trajet optique de transmission de données avec un système WDM comprenant une pluralité de canaux de transmission de données de fréquence différente avec
- au moins un multiplexeur (2) disposé au début pour le regroupement des canaux de transmission de données (1.1 - 1.4),
- un démultiplexeur (9) disposé à la fin pour la séparation des canaux de transmission de données (10.1 - 10.4)
- au moins un tronçon de trajet intercalé avec des moyens pour la détermination et la compensation du basculement spectral de signaux de données (8) transmis,
- au moins dans un tronçon de trajet des moyens pour la mesure indirecte ou directe de l'intensité globale (3) du signal de lumière transmis, et
- une ou plusieurs sources de lumière de remplissage (6) réglées pour l'injection de puissance de lumière dans au moins un tronçon de trajet
**caractérisé en ce que**
il est prévu un moyen (14) pour le réglage rapide de la puissance de la source de lumière de remplissage (6) pour la compensation des variations de puissance de l'intensité globale du signal de données et un moyen (13) pour la commande lente de la compensation du basculement spectral de signaux de données transmis et la variation de la puissance de la source de lumière de remplissage (6) dans leur état initial.

8. Trajet optique de transmission de données selon la revendication 7 précédentes, **caractérisé en ce que** les moyens (3) pour la mesure indirecte et directe de l'intensité globale du signal de lumière transmis et au moins une source régulée de lumière de remplissage (6) pour l'injection de puissance de lumière sont disposés au début d'un tronçon de trajet, de préférence au début du trajet global de transmission de données.

9. Trajet optique de transmission de données selon l'une quelconque des revendications 7 à 8, précédentes, **caractérisé en ce qu'**un élément de temporisation (5) est prévu entre les moyens (3) pour la mesure de l'intensité globale et une source de lumière de remplissage (6).

10. Trajet optique de transmission de données selon la revendication 9 précédente, **caractérisé en ce que** l'élément de temporisation (5) est une fibre à compensation de dispersion (DCF), une fibre à faible dispersion ou une fibre dopée avec un élément de terre rare.

11. Trajet optique de transmission de données selon l'une quelconque des revendications précédentes 7 à 10, **caractérisé en ce que** les dispositifs de réglage (13, 14) pour la mise en oeuvre du procédé de réglage selon l'une quelconque des revendications 1 à 7, sont prévus pour le réglage d'au moins une source de lumière de remplissage (6).

12. Trajet optique de transmission de données selon l'une quelconque des revendications 7 à 11, **caractérisé en ce que** la fréquence d'une source de lumière de remplissage (6) est située à l'intérieur de la bande de longueurs d'onde transmise des signaux de données transmis, de préférence la source de lumière de remplissage (6) présente une unique fréquence.

13. Trajet optique de transmission de données selon l'une quelconque des revendications 7 à 12 précédentes, **caractérisé en ce que** les moyens pour la compensation de basculement spectral de signaux de données transmis présentent des filtres dépendants de la fréquence et réglables dans les tronçons de trajet.

14. Trajet optique de transmission de données selon l'une quelconque des revendications 7 à 13 précédentes, **caractérisé en ce que** les moyens pour la compensation du basculement spectral de signaux de données transmis dans les tronçons de trajet pour la compensation du basculement, présentent des EDFA (8.1.1 - 8.1.N) réglés au niveau de la puissance.

15. Trajet optique de transmission de données selon l'une quelconque des revendications 7 à 14 précédentes, **caractérisé en ce que** les moyens (3) pour la détermination du basculement spectral de signaux de données transmis dans les tronçons de trajet présentent au moins un filtre ou un amplificateur avec une caractéristique de transmission ou d'amplification dépendante de la fréquence et des mesureurs d'intensité globale placés en aval, y compris une unité d'analyse pour la détermination du basculement.
